# EUROPEAN PATENT SPECIFICATION

(11) **EP 1 017 200 B1**
(45) Date of publication and mention of the grant of the patent: **14.03.2012**
(21) Application number: 99309604.9
(22) Date of filing: 30.11.1999
(51) Int. Cl.: H04L 12/64

(54) **Management of voice and data traffic over a data network**
Verwaltung des Sprach- und Datenverkehr über ein Datennetz
Gestion du traffic de la voix et des données sur un réseau de commutation de données numériques

(30) Priority: 31.12.1998 US 223924
(43) Date of publication of application: 05.07.2000
(73) Proprietor: Nortel Networks Limited, St. Laurent, QC H4S 2A9 (CA)
(72) Inventor: Himbeault, Lee C., Calgary, Alberta T2Y 2Y7 (CA); Chow, Ken, Calgary, Alberta T2K 2L2 (CA)
(74) Representative: Loven, Keith James

(56) References cited:
- EP-A- 0 948 163
- WO-A-98/48542
- WO-A-98/50865

## Description

### Field of the Invention

This invention relates generally to the field of data networks, and in particular to the management of voice and data traffic over such data networks.

### Background

The Internet has provided the ability of users to bypass normal long distance telephone charges. This is done by converting analog or digital voice signals to data packets and using the Internet Protocol (IP), transferring the IP packets between callers. At the receiving end, each caller decodes the IP packets and converts them back to voice signals. Since users normally pay an Internet service provider for unlimited access to the Internet, there is no additional charge for the transfer of data. Using the Internet in such a manner to carry telephone calls without paying additional tolls is referred to as Toll Bypass.

The major concern for most customers looking at VoIP implementations is guaranteeing the quality and reliability of the VoIP call relative to the traditional long distance call. The quality of the call is measured in terms of clarity of voice. Reliability is defined by the ability to make a call at any desired time, and ensuring that calls are not dropped in the middle of a conversation. Some degradation in quality is acceptable. No degradation in reliability is acceptable.

The Internet Protocol (IP) is inherently connectionless. This means that packets are sent into the network with no confirmation or expectation that the other end is listening, able to listen, ready to listen or still listening. Also, IP treats all packets equally whether they contain information that is time critical or not. Voice packets are time critical. If they do not arrive on time, the voice is interrupted, or portions are skipped, leading to perhaps missed information and poor interaction between callers. There are a number of ways to implement priorities in an IP network to ensure that voice IP packets arrive in a more timely manner. Some priority implementations are emerging as standards but it will still be many years before the standards are stable and widely deployed. In the interim, organizations wishing to implement VoIP solutions must either accept the problems inherent in an IP network or must spend considerable time and effort implementing the wide variety of priority schemes available to ensure higher levels of Quality and Reliability.

Many voice engineers are unfamiliar with IP and its fundamentals and would not be in a position to move quickly into the arts of engineering and implementing quality of service parameters. Likewise the data networking experts in most organizations are unfamiliar with voice circuit engineering and implementation and will be wary of allowing priority access to the IP network ahead of data traffic. This presents a great challenge to those managing voice networks.

There is a need to monitor VoIP implementations for quality and reliability. There is a need for voice engineers and data engineers to work together in implementing high value solutions for their clients. As VoIP is an emerging technology and deployment is limited in scope and scale there are few ways to solve such problems. Many analysts and consultants offer up the caveat that the technology works and can be implemented but that enterprises can count on experiencing problems associated with scaling the solution to a large number of sites (such as more than 50) and then managing the quality and reliability on an ongoing basis.

Point solutions to these problems involve many solution sets for remote monitoring, traffic analysis, protocol analysis, WAN (Wide Area Network) link optimization, etc. The issue is one of brute force analysis. Although the tools and standards exist for analyzing and reporting on LAN (Local Area Network) and WAN utilization and performance, there is a need for a better way to analyze and report on virtual VoIP networks.

WO 98/48542 Bell Communications Research, Inc. published 29 October 1998 describes an apparatus and method for automatically designating a telephone call route through a telephone network including a circuit switched telephone network and a packet switched network. The method includes the steps of determining from preference information and the telephone number whether the telephone call can be routed to the called party through the packet switched network, and assigning a route for the telephone call through one of either the packet switched network or the STN to the called party based on whether the call is routable through the packet switched network.

EP0863638A2 discloses a computer-implemented method for modeling portions of a data network which handles voice packets, using periodically generated signals available from local databases of node devices or other network elements relating to the performance of the network.

GB2324223A discloses a computer-implemented method of controlling a multi-service communications network by modeling the network elements functionally.

### Summary of the Invention

According to one aspect of the present invention there is provided a network for transferring data and voice over Internet Protocol, characterised by the network comprising: a plurality of communication elements, each element collecting information regarding voice packets as they pass through the elements by creating a trap at each element including an element ID when such voice packets are handled by the elements, wherein the elements are selected from the group consisting of PBX call router, VoIP gateway, WAN gateway, IP router, and LAN backbone; a network manager that collects the information from each of the communication elements; and wherein the network manager creates a view of a virtual voice network from the collected information which represents the elements involved in the transfer of voice packets.

According to another aspect of the present invention there is provided a computer implemented method for tracking transmitted voice packets to model portions of a data network which handle voice packets, characterised by the method comprising: creating data structures regarding elements in the data network involved in transfer of voice packets by creating a trap at each element including an element ID when such voice packets are handled by the elements, wherein the elements are selected from the group consisting of PBX call router, VoIP gateway, WAN gateway, IP router, and LAN backbone; and defining logical associations between the elements based on the created data structures to create a view of a virtual voice network.

A virtual network map view of all nodes is provided in a network which is representative of VoIP utilization of the network. As VoIP packets traverse elements of the network, information is stored or logged for use by a network management service. Combined with knowledge of the physical manifestation of the network, the virtual network map is created and used to manage the network as it relates to VoIP traffic.

Layered on top of the virtual network map is a least cost routing table. Other modeled devices such as routers, frame relay access devices (FRADs) and switches complete the picture by representing the logical virtual connections between nodes. Artificial Intelligence (AI) capability provided by some existing network management systems (NMS) defines a virtual link between communicating devices. This means that each virtual link between devices can be modeled, managed and configured independent of the multiple and complex number of real interfaces or links that it may be comprised of.

A Management Information Base (MIB) is defined for each element in the network. Once a MIB is defined for each element in the network, real and virtual associations between elements in the network are formed for each valid model. This differs significantly from the generic NMS implementation where individual elements are modeled and managed but virtual or real connections cannot be modeled or managed.

A voice engineer or data engineer looking at real-time network performance sees the utilization in real time or trends in the utilization over a particular time period. By drilling down into under or over utilized virtual connections the engineer can make decisions for optimizing quality and reliability at the real interface or real link layer by viewing and managing the VoIP application at the virtual link level.

### Brief Description of the Drawings

- Figure 1: is a block diagram of a physical VoIP network having multiple elements located in different cities and having a network management system in accordance with the present invention.
- Figure 2: is a flow chart of the progression of a VoIP packet through the network of Figure 1.
- Figure 3: is a block diagram of a data structure created by a trap used to collect information related to the progression of a VoIP packet at each element in the network.
- Figure 4: is a logical diagram of the steady state view of a network.

### Detailed Description

In the following detailed description of exemplary embodiments of the invention, reference is made to the accompanying drawings which form a part hereof, and in which is shown by way of illustration specific exemplary embodiments in which the invention may be practiced. These embodiments are described in sufficient detail to enable those skilled in the art to practice the invention, and it is to be understood that other embodiments may be utilized and that logical, mechanical, electrical and other changes may be made without departing from the spirit or scope of the present invention. The following detailed description is, therefore, not to be taken in a limiting sense, and the scope of the present invention is defined only by the appended claims.

The detailed description provides a description of a distributed network and the path which voice over IP (VoIP) packets take in the network during transmission of such packets between telephone callers. Detail is then provided on how information is collected during the transmission of VoIP packets and used together with static information to construct logical models of the network in the context of its use for VoIP. The use of such models is then discussed followed by a conclusion which states some of the potential benefits and describes further alternative embodiments.

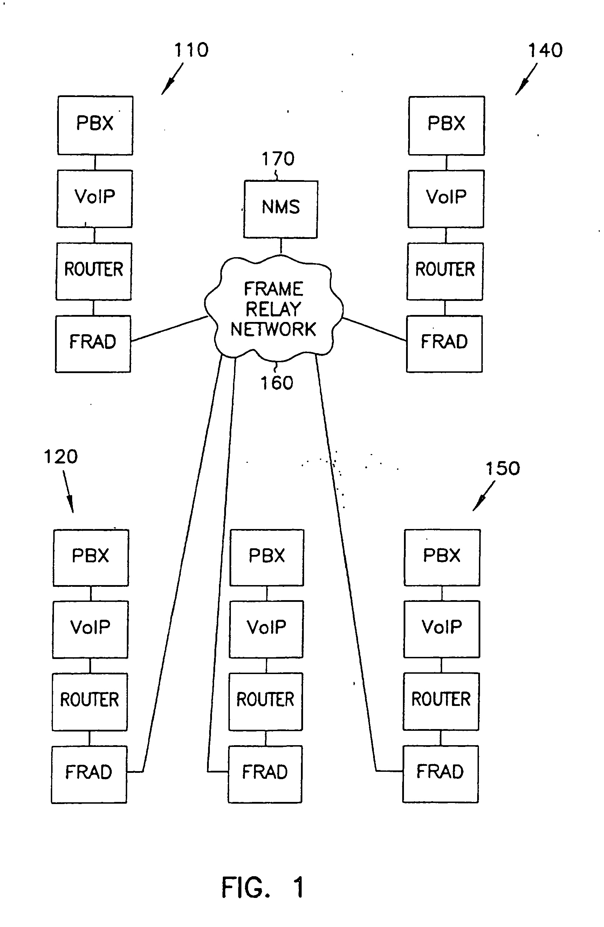

In Figure 1, several sites are shown as having local networks 110, 120, 130, 140 and 150 connected through a frame relay network 160. Each of the local networks comprises multiple elements such as PBX, VoIP, Router and FRAD. Each PBX generates a least cost routing table, a trunk provisioning table, denied call logs and dialing plan. The VoIP element comprises a call routing table and dialing plan. The Router comprises a routing table, interface statistics, port statistics and interface provisioning. Each FRAD further comprises DLCI provisioning attributes, port speeds and discard rules. Each of these elements and data structures are in standard use today in networks throughout the world. However, to gain access to information from them regarding performance of the network, they have been polled independently in the past.

In a standards based network environment a SNMP (Simple Network Management Protocol) Framework compliant Network Management System (NMS) 170 compiles a Management Information Base (MIB) for each type of element such as routers, hubs, switches, PBXs, and KSUs (key system units) that it manages. The MIB consists of both standard and enterprise specific information elements. The MIB defines an object for each attribute, alarm condition, fault or event condition that can be present on the element that it is written for. Compilation of the MIB on the NMS enables the NMS to communicate with the element for all aspects of remote management that are defined in the MIB. This methodology and implementation applies equally to all SNMP Framework compliant NMSs.

Manufacturers of elements (routers, hubs, switches, PBXs, KSUs) will often develop a custom application that interacts with the NMS to provide an optimized view of the element they manufacture. This enables the manufacturer to focus on the things that are unique to their product and let the NMS interpret and represent the things that are somewhat generic across all elements being managed. It does not, however, provide a view of the network itself as it is used to transport VoIP packets.

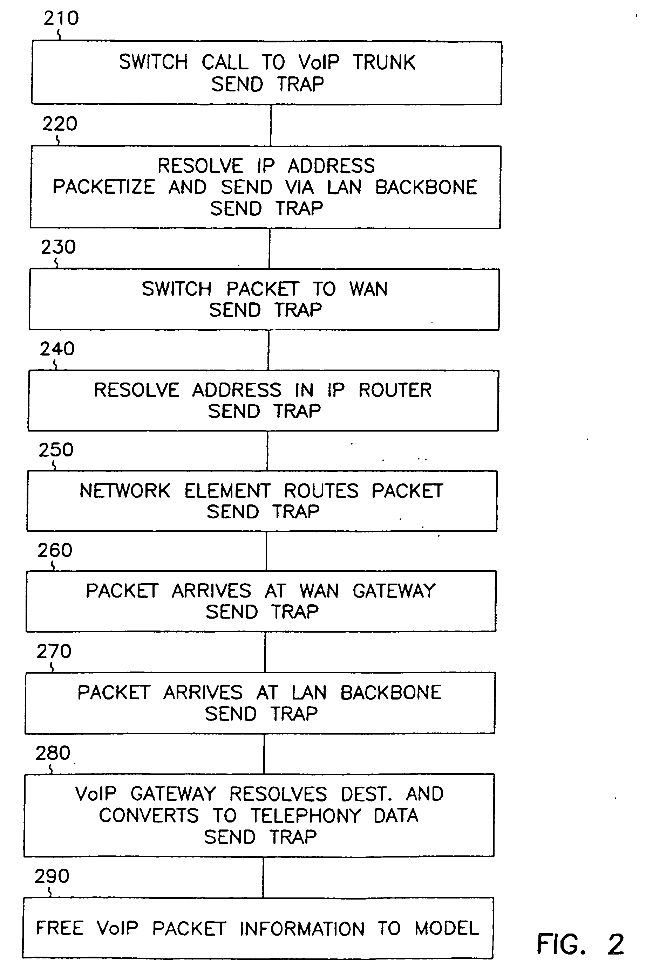

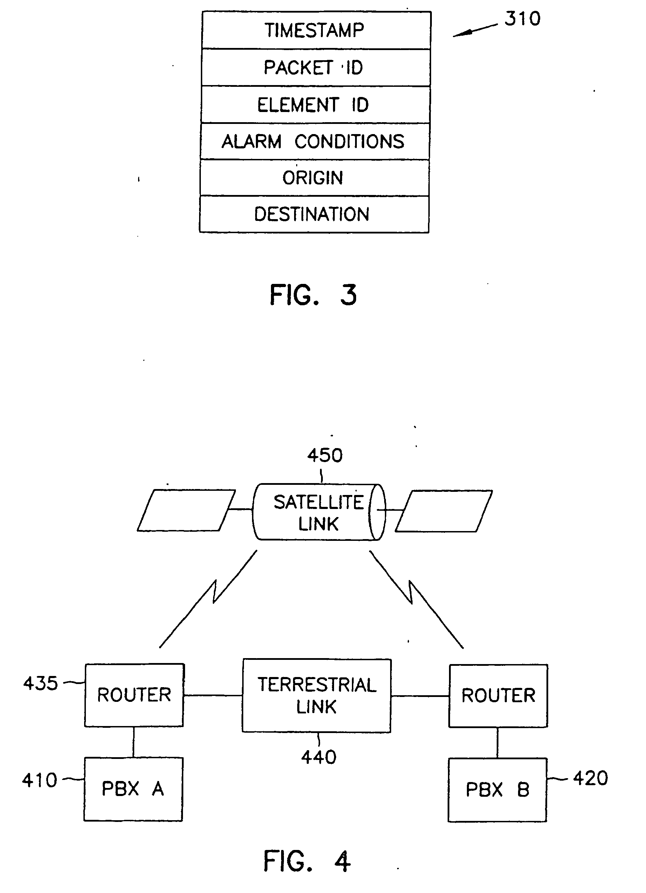

In Figure 2, a modeling process tracks VoIP packet progression through the network. This tracking is used to provide information for the formation of a virtual network model as described in the next section to give the network manager a total view of the VoIP application within the network. At 210 in Figure 2, a PBX call router determines that a VoIP call is the best path and switches the call to a VoIP trunk. An SNMP Trap is sent to the NMS or is logged on the PBX element for later bulk upload to the NMS. The SNMP Trap creates a data structure having data elements shown at 310 in Figure 3 that captures information about the element for which it is generated. The information may vary from element to element, but is directed toward both alarm conditions and connections utilized for the call. At 220, the VoIP gateway resolves the destination IP Gateway Address based on the called number. The voice traffic is packetized accordingly and the header is established with the IP Gateway Address for the far-end. The VoIP Packet is sent via the LAN Backbone. An SNMP Trap is sent to the NMS or is logged on the VoIP element for later bulk upload to the NMS.

At 230, the VoIP Packet is switched through the LAN Backbone to the WAN Gateway (a Router/FRAD/ATM Access device) for the site. The VoIP Packet enters the ingress queue of the WAN Gateway. An SNMP Trap is sent to the NMS or is logged on the WAN Gateway element for later bulk upload to the NMS. At 240, the Destination IP Address is resolved by the IP Router. This is accomplished by looking at Static Route Tables and/or RIP Route Tables or OSPF Route Tables. The VoIP Packet is priority queued to an egress interface queue that will begin its path to the far-end. An SNMP Trap is sent to the NMS or is logged on the WAN Gateway element for later bulk upload to the NMS.

At 250, each network element (IP Router, Switch, etc.) that handles the VoIP Packet on its route to the destination address logs the information pertaining to the VoIP Packet for later upload or retrieval by the NMS. At 260, the VoIP Packet arrives at the destination WAN Gateway for the site. The VoIP Packet enters an ingress queue and is prioritized for delivery to the VoIP Gateway device on site. Pertinent information is logged or sent as an SNMP trap to the NMS.

At 270, the VoIP Packet travels through the LAN Backbone for the site on its way to the VoIP Gateway. Its arrival at the VoIP Gateway is logged for bulk upload to the NMS or an SNMP Trap is sent. At 280, the VoIP Gateway resolves the destination telephone number of the VoIP Packet and converts the packet information back to telephony data understood by the PBX. The call is then passed to the PBX along with the relevant signaling information. The VoIP Gateway and the PBX send an SNMP Trap or log an event for later bulk upload or retrieval by the NMS. Finally, at 290, all information regarding VoIP packets is fed into the process model built on the provisioning view as described below. It has either been stored, or is delivered in bulk at this time.

The provisioning view works to locate and build the logical associations between PBX's and VoIP Gateways within the total network. This view is built independent of the underlying data network infrastructure and represents the ideal, steady-state view of the VoIP network. Dynamic changes to the underlying data network will occur. The fact remains that the steady state view of the virtual VoIP network remains constant and is based on the actual paths taken by VoIP packets as obtained from the trap data structures. Inspection of a particular virtual link in the steady-state view will reveal the underlying network information and statistics as gathered or reported to the model. The trap data structure 310 shows some of the elements and optional elements that may be used to build the view. As described above, the structure is built at each element that a data packet passes through. It may include a time stamp, packet ID, element ID, various alarm conditions if present, and may also include an indication of origin and destination of the packet. This information is used in one embodiment to help build the virtual network which represents the paths taken by VoIP packets, and also to ensure the integrity of the trap information received.

### Building the Steady-State View

The model process gathers the following information from the noted elements using the SNMP protocol and the Standard and Enterprise MIBs associated with the element of interest:
PBX -- least cost routing tables, information pertaining to E&M and/or VoIP trunks.
VoIP Gateway-- resolution tables for Dialed Number (DN) >> IP address, Host IP Address, Default Gateway, QoS (Quality of Service) or RSVP service implementation details.
WAN Gateway -- IP routing tables, Layer 2 Interface details, QoS or RSVP service implementation details.

### Rendering the Virtual VoIP Network Model

The information elements gathered above are compared to the models defined in the NMS for the element in question. The NMS in one embodiment comprises the Spectrum Network Manager by Cabletron Inc. or other advanced NMS, which comprises an artificial intelligence algorithm which is able to create logical associations between the PBX elements based on the bulk information obtained above. This view is a logical map of how the PBX elements are connected together for Voice Communications and Applications. This map removes the complexity of the underlying data network and its many and diverse elements.

### Using the Virtual VoIP Network Model

Once the steady-state model has been rendered, the information gathered in from the trap data structures is fed into the model. This information adds useful detail to the model for making engineering and troubleshooting decisions. Some examples include:

The PBX at A indicated at 410 is originating calls to a PBX at B indicated at 420 over a virtual link 430 in Figure 4. A router 435 in the link between A and B is configured with two WAN interfaces. One is terrestrial 440 and the other via satellite 450. The satellite interface does not have the necessary delay parameters to support a VoIP packet but the router has not been provisioned to exclude the satellite interface from its routing decisions for VoIP packets. This results in repeated failures for VoIP communications between A and B. In the model, the PBX element at location A will indicate an alarm condition due to repeated communications failures (the provisioning model defines default or user selectable alarm thresholds for each element). Because of the AI and the PBX models the NMS is able to segment the alarm condition to the Virtual Link between A and B. Furthermore the NMS will break the Virtual Link down into the two actual links and specify an alarm for the Satellite interface on the mid-link router. The technician or network engineer can now zero in on the mid-link router to initiate a new rule that specifies VoIP Packets may only use the terrestrial interface.

The Network Engineer has established some inter-PBX communications standards and thresholds. These parameters are fed into the model with the following outcomes:
i). Voice communications between A and Z have exceeded the threshold established for indirect communications (WAN Gateway to WAN Gateway via one or more intermediate WAN Gateways). The network engineer provisions a direct Permanent Virtual Circuit (PVC) between A and Z on the underlying network. This improves the quality of the communications between A & Z and off-loads some real-time critical traffic from the intermediate node(s).
ii). Voice communications from location B to other locations on the network has increased beyond the pre-established threshold. The network engineer is alerted to this trend via trending alarms in the NMS. Closer inspection of the VoIP Model reveals that the site requires the provision of more VoIP trunks. The Model also reveals that the underlying network bandwidth must be increased to support these new trunks.

The NMS comprises a computer program in one embodiment, which executes or runs on a personal computer, which includes a standard processor and random access memory, and further includes a hard disk drive for reading from and writing to a hard disk, and may further include a magnetic disk drive for reading from and writing to a removable magnetic disk, an optical disk drive for reading from and writing to a removable optical disk such as a CD-ROM or other optical medium. The drives and their associated computer-readable media provide nonvolatile storage of computer-readable instructions, data structures, program modules and other data used in the NMS. Although the exemplary environment described herein employs a hard disk, a removable magnetic disk and a removable optical disk, those skilled in the art will appreciate that other types of computer-readable media which can store data accessible by a computer may also be used in the exemplary operating environment. Such media may include magnetic cassettes, flash-memory cards, digital versatile disks, Bernoulli cartridges, RAMs, ROMs, carrier waves for electronic transmission of data and the like. Further, the programs may be executed by other than an industry standard personal computer, such as some common telecommunication devices having microprocessors or other processing elements therein.

Program modules may be stored on computer readable media and may include operating systems, one or more application programs, other program modules, and program data. Such programs, of course, could be down-loaded to a network elements via the Internet or equivalent communication network and protocol.

### Conclusion

A virtual network map view of all nodes is provided in a network which is representative of VoIP utilization of the network. As VoIP packets traverse elements of the network, information is stored or logged for use by a network management service. Combined with knowledge of the physical manifestation of the network, the virtual network map is created and used to manage the network as it relates to VoIP traffic. Virtual links between ICS are modeled, managed and configured independent of the multiple and complex number of real interfaces or links that it may be comprised of

A voice engineer or data engineer looking at real-time network performance can see the utilization in real time or trend the utilization over a particular time period. By drilling down into under or over utilized virtual connections the engineer can make decisions for optimizing quality and reliability at the real interface or real link layer by viewing and managing the VoIP application at the virtual link level. This application is intended to cover any adaptations or variations of the present invention. It is manifestly intended that this invention be limited only by the claims and equivalents thereof.

## Claims

1. A computer implemented method for tracking transmitted voice packets to model portions of a data network which handle voice packets, **characterized by** the method comprising:
creating data structures regarding elements in the data network involved in transfer of voice packets by creating a trap at each element including an element ID when such voice packets are handled by the elements, wherein the elements are selected from the group consisting of PBX call router, VoIP gateway, WAN gateway, IP router, and LAN backbone; and
defining logical associations between the elements based on the created data structures to create a view of a virtual voice network.

2. The method of claim 1 wherein creating data structures comprises creating an SNMP trap.

3. The method of claim 2 , wherein the SNMP trap is either logged for retrieval by, or immediately sent to, a network manager.

4. The method of any preceding claim, wherein the step of creating data structures includes:
recording information regarding transfer of voice packets at each element in the data network involved in the transfer of such voice packets; and the method further includes:
collecting such recorded information to determine logical associations between the elements, such logical associations representing the virtual voice network.

5. A computer program element comprising computer program code means to make a computer execute to perform the method of any proceeding claim.

6. The computer program element of claim 5, embodied on a computer readable medium.

7. A network for transferring data and voice over Internet Protocol, the network comprising:
a plurality of communication elements, each element adapted to collect information regarding voice packets as they pass through the elements by creating a trap at each element including an element ID when such voice packets are handled by the elements, wherein the elements are selected from the group consisting of PBX call router, VoIP gateway, WAN gateway, IP router, and LAN backbone;
a network manager that is adapted to collect the information from each of the communication elements; and
wherein the network manager is adapted to create a view of a virtual voice network from the collected information which represents the elements involved in the transfer of of voice packets.

8. The network of claim 7, wherein the information is collected at each element by a trap routine.

9. The network of claim 8, wherein the information collected comprises alarm conditions.

10. The network of claims 7, 8 or 9, wherein the information provides the network manager the ability to determine the amount of voice packet traffic at each element.

11. Electronic signals representing instructions or statements to make a computer execute procedure to perform the method steps of any claims 1 to 4, wherein the electronic signals are adapted for transmission over a communication network.

## Patentansprüche

1. Computer-implementiertes Verfahren zum Verfolgen von übertragenen Sprachpaketen zu Modellteilen eines Datennetzwerks, das Sprachpakete verarbeitet, **dadurch gekennzeichnet, dass** das Verfahren aufweist:
Erzeugen von Datenstrukturen betreffend Elemente in dem Datennetzwerk, die bei der Übertragung von Sprachpaketen involviert sind, durch Erzeugen einer Falle bei einem jeden Element einschließlich eines ID-Elements, wenn solche Sprachpakete von den Elementen verarbeitet werden, wobei die Elemente ausgewählt werden aus der Gruppe bestehend aus PBX call router, VoIP gateway, WAN gateway, IP router und LAN backbone; und
Definieren von logischen Zusammenhängen zwischen den Elementen basierend auf den erzeugten Datenstrukturen, um eine Ansicht eines virtuellen Sprachnetzwerkes zu erzeugen.

2. Verfahren nach Anspruch 1, wobei das Erzeugen der Datenstrukturen das Erzeugen einer SNMP Falle aufweist.

3. Verfahren nach Anspruch 2, wobei die SNMP Falle entweder aufgezeichnet ist zum Auffinden von, oder unmittelbar gesendet wird an einen Netzwerkmanager.

4. Verfahren nach einem der vorhergehenden Ansprüche, wobei der Schritt des Erzeugens von Datenstrukturen umfasst:
Aufzeichnen von Informationen betreffend die Übertragung von Sprachpaketen bei einem jeden Element in dem Datennetzwerk, involviert in der Übertragung solcher Sprachpakete; und wobei das Verfahren weiterhin umfasst:
Sammeln einer solchen aufgezeichneten Information, um logische Zusammenhänge zwischen den Elementen zu bestimmen, wobei derartige logische Zusammenhänge das virtuelle Sprachnetzwerk repräsentieren.

5. Computerprogrammelement mit einer Computerprogrammcodeeinrichtung, um einen Computer zu veranlassen, das Verfahren nach einem der vorhergehenden Ansprüche auszuführen.

6. Computerprogrammelement nach Anspruch 5, eingebettet in ein computerlesbares Medium.

7. Netzwerk zum Übertragen von Daten und Sprache über ein Internetprotokoll, wobei das Netzwerk aufweist:
eine Mehrzahl von Kommunikationselementen, wobei ein jedes Element in der Lage ist, Information betreffend Sprachpaketen zu sammeln, wenn sie sich durch die Elemente bewegen, durch Erzeugen einer Falle bei einem jeden Element einschließlich eines ID-Elements, wenn derartige Sprachpakete durch die Elemente verarbeitet werden, wobei die Elemente ausgewählt sind aus einer Gruppe bestehend aus PBX call router, VoIP gateway, WAN gateway, IP router und LAN backbone;
einen Netzwerkmanager, der in der Lage ist, die Informationen aus einem jeden der Kommunikationselemente zu sammeln; und
wobei der Netzwerkmanager in der Lage ist, eine Ansicht eines virtuellen Sprachnetzwerkes aus der gesammelten Information zu erzeugen, das die Elemente repräsentiert, die bei der Übertragung von Sprachpaketen involviert sind.

8. Netzwerk nach Anspruch 7, wobei die Information bei einem jeden Element durch eine Fallroutine gesammelt wird.

9. Netzwerk nach Anspruch 8, wobei die gesammelte Information Alarmbedingungen aufweist.

10. Netzwerk nach Anspruch 7, 8 oder 9, wobei die Information den Netzwerkmanager in die Lage versetzt, die Menge des Sprachpaketverkehrs bei einem jeden Element zu bestimmen.

11. Elektronische Signale, die Befehle oder Festlegungen darstellen, um einen Computer zu veranlassen, Vorgänge auszuführen, um die Verfahrensschritte nach einem der Ansprüche 1 bis 4 auszuführen, wobei die elektronischen Signale für die Übertragung über ein Kommunikationsnetzwerk geeignet sind.

## Revendications

1. Procédé mis en oeuvre par ordinateur pour la poursuite de paquets voix transmis vers des parties modèles d'un réseau de données qui traite des paquets voix, **caractérisé en ce que** le procédé comprend le fait :
de créer des structures de données concernant des éléments dans le réseau de données impliqués dans le transfert de paquets voix en créant un déroutement à chaque élément comportant un identifiant d'élément lorsque de tels paquets voix sont pris en charge par les éléments, dans lequel les éléments sont choisis dans le groupe constitué d'un routeur d'appel PBX, d'une passerelle VoIP, d'une passerelle WAN, d'un routeur IP, et d'un réseau fédérateur LAN ; et
de définir des associations logiques entre les éléments sur la base des structures de données créées afin de créer une vue d'un réseau voix virtuel.

2. Procédé de la revendication 1 dans lequel la création des structures de données comprend la création d'un déroutement SNMP.

3. Procédé de la revendication 2, dans lequel le déroutement SNMP est soit journalisé pour être récupéré par un gestionnaire de réseau, soit immédiatement envoyé à ce dernier.

4. Procédé de l'une quelconque des revendications précédentes, dans lequel l'étape de création des structures de données comprend le fait :
d'enregistrer des informations relatives au transfert des paquets voix à chaque élément dans le réseau de données impliqué dans le transfert de tels paquets Voix ; et le procédé comprend en outre le fait :
de rassembler de telles informations enregistrées pour déterminer des associations logiques entre les éléments, de telles associations logiques représentant le réseau voix virtuel.

5. Elément de programme informatique comportant un moyen de code de programme informatique pour amener l'ordinateur à exécuter le procédé de l'une quelconque des revendications précédentes.

6. Elément de programme informatique de la revendication 5, intégré sur un support lisible par ordinateur.

7. Réseau pour transférer des données et de la voix sur un Protocole Internet, le réseau comprenant :
une pluralité d'éléments de communication, chaque élément adapté pour rassembler des informations concernant des paquets voix au cours de leur passage par les éléments en créant un déroutement à chaque élément comportant un identifiant d'élément lorsque de tels paquets voix sont pris en charge par les éléments, dans lequel les éléments sont sélectionnés dans le groupe composé d'un routeur d'appel PBX, d'une passerelle VoIP, d'une passerelle WAN, d'un routeur IP, et d'un réseau fédérateur LAN ;
un gestionnaire de réseau qui est adapté pour rassembler les informations provenant de chacun des éléments de communication ; et
où le gestionnaire de réseau est adapté pour créer une vue d'un réseau voix virtuel à partir des informations rassemblées qui représentent les éléments impliqués dans le transfert de paquets voix.

8. Réseau de la revendication 7, dans lequel les informations sont rassemblées à chaque élément par un sous-programme de déroutement.

9. Réseau de la revendication 8, dans lequel les informations collectées comprennent des conditions d'alerte.

10. Réseau des revendications 7, 8 ou 9, dans lequel les informations procurent au gestionnaire de réseau la capacité pour déterminer la quantité de trafic de paquets voix au niveau de chaque élément.

11. Signaux électroniques représentant des instructions ou des déclarations pour amener un ordinateur à exécuter une procédure pour réaliser les étapes du procédé de l'une quelconque des revendications 1 à 4, où les signaux électroniques sont adaptés pour effectuer une transmission sur un réseau de communication.
